# EUROPÄISCHE PATENTSCHRIFT

(11) **EP 2 693 974 B1**
(45) Veröffentlichungstag und Bekanntmachung des Hinweises auf die Patenterteilung: **23.10.2019**
(21) Anmeldenummer: 12720813.0
(22) Anmeldetag: 05.04.2012
(51) Int. Cl.: A61C 7/14, A61C 7/00

(54) **VERFAHREN ZUR HERSTELLUNG VON TRAYS FÜR BRACKETS**
METHOD FOR PRODUCING TRAYS FOR BRACKETS
PROCÉDÉ DE PRODUCTION DE GOUTTIÈRES DE TRANSFERT POUR DES BRACKETS

(30) Priorität: 05.04.2011 WO PCT/EP2011/055258
(43) Veröffentlichungstag der Anmeldung: 12.02.2014
(73) Patentinhaber: Jo, Yong-Min, 40227 Düsselddorf (DE); Urban, Andreas, 58135 Hagen (DE)
(72) Erfinder: Jo, Yong-Min, 40227 Düsselddorf (DE); Urban, Andreas, 58135 Hagen (DE)
(74) Vertreter: Pellengahr, Maximilian Rudolf
(86) Internationale Anmeldenummer: PCT/EP2012/056349
(87) Internationale Veröffentlichungsnummer: WO 2012/136803

(56) Entgegenhaltungen:
- WO-A1-2007/129833
- WO-A1-2009/020282
- WO-A1-2011/144857
- FR-A1- 2 959 929
- US-A1- 2007 031 775
- US-A1- 2008 227 050

## Beschreibung

### Technisches Gebiet

Die Erfindung betrifft ein Verfahren zur Herstellung von individuellen Trays zur Positionierung von Brackets.

Brackets werden in verschiedenen Formen mit weiteren Hilfsmitteln, wie insbesondere Drähten, zur kieferorthopädischen Korrektur von Zahnfehlstellungen eingesetzt. Dazu werden in der Regel mindestens zwei Brackets oder Bänder auf bzw. über Zahnkronen aufgebracht. Dabei werden Brackets in der Regel auf Zahnkronen geklebt. Brackets können dabei sowohl auf die bukkale als auch die linguale Oberfläche der Zähne aufgeklebt werden. Die Brackets weisen in der Regel einen Slot zur Aufnahme eines Bogens, insbesondere eines Drahtes, insbesondere mit rechteckiger Querschnittsfläche, auf. Dabei ist es möglich, über den Bogen Kräfte und Drehmomente auf die Zähne zu übertragen, um dadurch ihre Position sowie Ausrichtung zu beeinflussen.

Ursprünglich wurden aufwendig gebogene Bögen eingesetzt, die für die verschiedenen Behandlungsstufen angepasst werden mussten. Durchgesetzt hat sich dagegen die Straight-Wire-Technik, bei der die Brackets derart geformt sind, dass ein aufwendiges Biegen des Bogens in der Regel entfallen kann. Insbesondere werden Bewegungen erster, zweiter und dritter Ordnung durch entsprechende Ausbildung der Brackets überflüssig. So werden die Biegungen erster Ordnung beispielsweise durch Variation der Bracketbasenhöhe ersetzt. Durch die in die Brackets unterschiedlich eingearbeiteten Vorgaben werden solche Brackets auch als programmierte Bracket-Apparaturen bezeichnet. Bei dem Einsatz von Brackets in der Straight-Wire-Technik spielt die exakte Positionierung der Brackets auf den Zähnen eine besonders wichtige Rolle, da sich die eingearbeiteten Vorgaben erst dann wie gewünscht auf die Zähne übertragen können.

### Stand der Technik

Um hier die Arbeit des Kieferorthopäden beim Aufbringen der Brackets zu erleichtern und eine zuverlässigere Behandlung zu gewährleisten sowie Fehler zu vermeiden, sind zahlreiche Techniken bekannt. Beispielsweise ist aus der EP 1 941 842 A2 bekannt, an die individuelle Zahnoberfläche angepasste Bracketfußflächen zu verwenden bzw. zu produzieren, so dass jedes Bracket nur in der vorher geplanten Ausrichtung und Platzierung auf dem jeweiligen Zahn anzubringen ist.

Darüber hinaus ist aus der US 3,738,005 bekannt, die Brackets auf einem Setup zu fixieren und darüber ein Tray zu gießen. Anschließend wird das Tray mit den darin aufgenommenen Brackets vom Setup abgebrochen und werden mit Hilfe des Trays die darin platzierten Brackets auf den Patienten übertragen.

Auch ist es bekannt, die Trays aus einem virtuellen Setup durch Rapid-Prototyping herzustellen.

US2007/0031775 offenbart individuelle Trays.

### Darstellung der Erfindung

Die bekannten Hilfsmittel bzw. Verfahren weisen jedoch alle Nachteile auf. So dass sie entweder wenig genau und/oder mit hohem Aufwand und Kosten verbunden sind. Insbesondere ist die individuelle, passgenaue Fertigung von Bracketfußflächen aufwendig und führt zudem zu wesentlich instabileren Brackets. Darüber hinaus ist die Abdeckung eines großen Teils der Zahnoberfläche negativ zu beurteilen. Dadurch wird die das Aufbringen der Brackets erschwert. Auf der anderen Seite ist das zunächst manuelle Fixieren auf einem Setup, wie in der US 3,738,005 schon mit Ungenauigkeiten behaftet. Darüber hinaus bringt das Übergießen und sodann unter Aufbringung vergleichsweise großer Kraft durchgeführte Entfernen der Brackets von dem Setup Nachteile bezüglich der Genauigkeit mit sich. Durch Rapid-Prototyping hergestellte Trays zeigen häufig Probleme bei der Haltbarkeit. Auch ist das entfernen der Trays nach dem Aufbringen der Brackets auf die Zahnkronen häufig problematisch.

Somit ist es Aufgabe der Erfindung, ein Verfahren anzugeben, mit dem ein Tray zur Platzierung von Brackets auf einfache Weise geschaffen werden kann und dass es erlaubt, Brackets schnell und mit hoher Genauigkeit zu platzieren.

Dazu ist ein Freihalten eines großen Arbeitsbereiches von Vorteil. Auch ein einfaches Ablösen der Trays von den aufgeklebten Brackets soll bei jedoch ausreichendem Halt der Brackets im Tray gewährleistet sein.

Gelöst wird diese Aufgabe durch ein Verfahren gemäß Anspruch 1 sowie ein Tray gemäß Anspruch 14. Die abhängigen Ansprüche bis 13 geben vorteilhafte Weiterbildungen an.

Das erfindungsgemäße Verfahren beinhaltet die folgenden Schritte:

Es wird mindestens ein reales, insbesondere einteiliges Modell hergestellt, wobei das mindestens eine Modell ein Abbild von zumindest Abschnitten von mindestens zwei Zahnkronen von in einem Kiefer befindlichen Zähnen ist und den Abbildern der Zahnkronen zugeordnete Bracketabbilder oder Brackets beinhaltet. Es kann auch Verbindungen mit einer geplanten Größe und Form zwischen Bracket und Zahnkrone, insbesondere virtuelle Verbindungen, beinhalten. Geschaffen wird somit mindestens ein Modell, das insbesondere einteilig ist. Dabei wird zumindest ein Abschnitt von jedem der zwei Zahnkronen mit zugeordneten Bracketabbildern beziehungsweise Brackets vom Modell abgebildet. Darüber hinaus werden die Bracketabbilder beziehungsweise Brackets real abgebildet und, soweit vorhanden, auch die jeweiligen Verbindungen im realen Modell wiedergegeben. Somit entsteht ein Modell von mindestens je einem Abschnitt von zwei Zahnkronen mit den zugeordneten Brackets und den ggf. dazwischen angeordneten Verbindungen. Insbesondere wird ein reales Modell von mindestens einem oder zwei gesamten Kiefer bzw. den in mindestens einem Kiefer oder in mindestens zwei Kiefern befindlichen Zahnkronen erstellt. Dabei werden vorteilhafterweise auch alle zugeordneten Brackets sowie ggf. dazwischen angeordnete Verbindungen im Modell real wiedergegeben.

Dabei ist es ausreichend einen ausreichend großen Teil jeder Zahnkrone und jedes Brackets und gegebenenfalls der Verbindung wiederzugeben, um später ein eindeutig an der Zahnkrone orientiertes Tray, das die Position des Brackets eindeutig definiert, anhand des Models herstellen zu können. Werden Trays über mehrere Zahnkronen ausgebildet, ist eine eindeutige Orientierung zu diesen mehreren Zahnkronen ausreichend.

Auch die modellierten Bracketabbilder müssen nur zu einem ausreichend Teil beziehungsweise mit einer ausreichenden Detailtreue wiedergeben werden, um in dem Tray später die realen Brackets in der vorbestimmten Orientierung zuverlässig und stabil anordnen zu können.

Bei der Erstellung des Modells muss die Anordnung der einzelnen Zahnkornen zueinander nur bezüglich der Zahnkronen im Modell wiedergegeben sein, über die am Ende ein gemeinsames Tray erstellt werden soll. Ansonsten können die Modelle der einzelnen Zahnkronen mit den zugeordneten Bracketabbildern sowie, falls vorhanden, den jeweiligen Verbindungen frei im Raum platziert werden. Dies ist zur einfachen Modellerstellung und insbesondere zur anschließenden Trayerstellung vorteilhaft. So kann insbesondere dann, wenn jedes Tray nur über ein Zahnkronenmodell erstellt werden soll, jedes Zahnkronenmodell mit Abstand zu den anderen, insbesondere mehrere oder alle mit Abstand nebeneinander angeordnet werden.

Gekennzeichnet sind die Trays dadurch, dass sie jeweils Abformung nur jeweils mindestens eines Zahnkronenteils der mindestens zwei Zahnkronen und
nur jeweils mindestens eines Bracketteils der mindestens zwei Bracketabbilder beziehungsweise Brackets umfassen. Dabei erstreckt sich jeweils der mindestens eine Bracketteil von der Kauffläche der zugeordneten Zahnkrone aus gesehen vertikal bis maximal zum Ende der Drahtführung und/oder bis zum Ende des ersten Hinterschnitts des Brackets und/oder Bracketabbildes, der bei der Betrachtung von der Kaufläche aus nach dem oberen Flügels angeordnet ist.

Dadurch ist ein ausreichender Halt, ein groß bemessener freier Arbeitraum bei gleichzeitig großer Präzision und sehr einfacher und schneller Herstellungsweise gegeben.

Brackets weisen üblicherweise Flügel, insbesondere zwei Flügel auf, die sich oberhalb und unterhalb der Drahtdurchführung erstrecken. Die Flügel sind teilweise leicht zum Bracketfuß gekrümmt beziehungsweise schaffen bei der Betrachtung von der Ebene der Kaufläche aus Hinterschnitte oder weisen solche auf. Diese sind im Bracketteil wiedergegeben.

Auch die Drahtführung des Brackets weist bei der Betrachtung von der Ebene der Kaufläche aus meist Hinterschnitte auf. Diese können ebenfalls im Modell beinhaltet sein. Nicht im Modell beinhaltet ist erfindungsgemäß bei der Betrachtung von der Ebene der Kaufläche aus jedoch die Ausdehnung des Brackets jenseits der Drahtdurchführung. Durch den Einsatz von Tiefziehfolie bei der Abformung, sind auch Hinterschnitte der Drahtdurchführung nicht Bestandteil des Bracketteils. Dann erstreckt sich der Bracketteil, bei der Betrachtung von der Ebene der Kaufläche aus insbesondere bis vor den Begin der Drahtdurchführung beziehungsweise ihrer Hinterschnitte.

Generell ist jedoch sicherzustellen, dass der Bracketteil ausreichend groß gewählt ist, dass eine Verbindung zwischen Zahnkronenabbild und Bracketabbild im Modell inkludiert ist. Dadurch und durch gegebenenfalls vorhandene Hinterschnitte wird ein ausreichender und genauer Halt des Brackets im Tray gewährleistet.

Auch ist es je nach Anwendungsfall sinnvoll die Erstreckung des Bracketteils bis innerhalb der Drahtdurchführung, insbesondere bis zu deren Mitte zu wählen. Dies ist teilweise notwendig, um eine Verbindung zwischen Zahnkronenabbild und Bracketabbild zu inkludieren, kann ansonsten jedoch auch zu einem besseren Halt des Brackets im Tray beitragen.

Ein über die Drahtdurchführung hinaus gehender Bracketteil ist jedoch nicht zu wählen, da dann das Herauslösen der verklebten Brackets erschwert und der Arbeitsbereich über Gebühr eingeschränkt wird.

Vorteilhafterweise wird der Zahnkronenteil so gewählt, dass er sich von der Ebene der Kaufläche aus gesehen bis zum Ende des Bracketteils erstreckt.

Vorteilhafterweise beinhaltet das Modell von jeder Zahnkrone nicht mehr als den entsprechenden Zahnkronenteil und von jedem Bracket beziehungsweise Bracketabbild nicht mehr als den entsprechenden Bracketteil. Dadurch kann eine direkte Fertigstellung der Trays erreicht werden.

Vorteilhafterweise erstreckt sich der Zahnkronenteil bei der Betrachtung von der Kaufläche aus gesehen nur bis maximal vor den ersten Hinterschnitt der Zahnkrone.

Der Erstellung des realen Modells kann das Erstellen eines virtuellen Setups von mindestens zwei Zahnkronen von in einem Kiefer befindlichen Zähnen vorgelagert sein. Unter einem Setup ist die gewünschte bzw. zu erzielende Anordnung der im Kiefer real befindlichen Zähne zu verstehen. Dabei werden mindestens zwei Zähne erfasst, insbesondere wird mindestens ein vollständiger Kiefer erfasst. Das Setup beinhaltet in der Regel nur die Zahnkronen und nicht die Wurzeln, da bei einem entsprechenden Abdruck, realer oder virtueller Natur, in der Regel nur das Abbild der Zahnkronen erfasst wird. Diese werden sodann in das Setup überführt und dort wie gewünscht angeordnet.

In der Regel werden dazu im Stand der Technik reale Abdrücke von Zahnkronen genommen, anschließend wieder in Positive gegossen und sodann zersägt und abschließend, in der Regel in Wachs, wie gewünscht positioniert. Ein solches Setup bildet meist die Grundlage für die Erstellung von Hilfsmitteln zur Beeinflussung der Zahnstellung. Das Setup wird in der Regel in einen Artikulator montiert, um die Bewegung der Kiefer nachvollziehen zu können.

Ein solches Setup kann jedoch bevorzugt auch virtuell nach der Erfassung der Ausgangssituation beim Patienten erfolgen.

Darauf folgt das Anordnen je eines Bracketabbildes zu mindestens zwei Abbildern der Zahnkronen im Setup. Die Bracketabbilder sind vorteilhafterweise virtuelle Abbilder von realen Brackets, insbesondere zumindest einem Großteil derer Außenkonturen. Dabei weist jedes virtuelle Bracketabbild eine Bracketabbildfußfläche auf. Die Bracketabbildfußfläche ist vorteilhafterweise ein Abbild einer realen Bracketfußfläche. Mit einer solchen Bracketfußfläche wird ein Bracket auf einem Zahn angeordnet und mit ihm verklebt. Dabei kommt der Kleber zwischen Bracketfußfläche und Zahn zu liegen.

Vorteilhafterweise erfolgt das Anordnen in einer Straight-Wire-Anordnung. Darunter ist eine Anordnung der Bracketabbilder beziehungsweise Brackets zu verstehen, die den Einsatz der Straight-Wire-Technik erlaubt. Insbesondere bei einer Straight-Wire-Anordnung ist die Platzierung der Brackets von entscheidender Bedeutung, so dass bei einer solchen Anordnung die Vorteile der Erfindung besonders zum Tragen kommen.

Bei der Anordnung der Bracketabbilder kann zwischen den Bracketabbildfußflächen und den Abbildern der Zahnkronenoberfläche ein Zwischenraum verbleiben. Der Zwischenraum der ggf. zwischen Bracketabbildfußfläche beziehungsweise Bracketfußfläche und Zahnkronenabbild vorhanden ist, wird später durch Kleber überbrückt.

Darauf kann das Erstellen einer Verbindung zwischen den Bracketabbildfußflächen und dem jeweiligen Abbild der Zahnkrone zur Überbrückung Zwischenräumen zwischen Bracketabbildfußflächen und dem jeweilig zugeordneten Abbild der Zahnkrone in den Fällen erfolgen, in denen die Bracketabbildfußfläche nicht, insbesondere nicht flächig, an dem virtuellen Abbild der Zahnkrone anliegt. Eine solche Erstellung der Verbindung erfolgt vorteilhafterweise voll automatisch. Vorteilhafterweise wird die kürzeste Verbindung zwischen Bracketabbildfußflächen und dem jeweiligen Abbild der Zahnkrone überbrückt. Vorteilhafterweise weist die Überbrückung dabei eine ausreichende Dicke auf, so dass ein entsprechend später gefertigtes Modell statisch stabil ist. Vorteilhafterweise ist die Überbrückung im Querschnitt umso größer ausgebildet, desto länger sie ist. Die Überbrückung verläuft dabei jeweils zwischen einem Bracketabbildfuß und dem Abbild der Zahnkrone, der die jeweilige Bracketabbildfußfläche zugeordnet ist. Liegt die Bracketabbildfußfläche schon, insbesondere flächig, an dem Abbild der Zahnkrone an, ist ein Erstellen einer Überbrückung nicht erforderlich, da die Überbrückung schon durch die Bracketabbildfußfläche gewährleistet.

Mit Vorteil ist die Verbindung im Querschnitt über die gesamte seitliche Erstreckung der Bracketabbildfußfläche ausgeführt, so dass später am Modell erstellte Teilabdrücke nicht in Hinterschnitte zwischen Zahnkrone und Bracketfußfläche greifen. Auch ist es denkbar, die Verbindung mit Vorteil an der Zahnkrone bzw. deren Abbild im Querschnitt größer als oder identisch zur Bracketfußfläche auszuführen. Dies ermöglicht eine besonders saubere Handhabung der späteren Verklebung.

Mit Vorteil werden zum Herstellen des realen Modells die Abbilder der Zahnkronen anstelle einer Rücktransformation in die Ausgangssituation beim Patienten derart zueinander ausgerichtet werden, dass die Drahtführungen der Bracketabbilder oder Brackets fluchten. Dadurch wird ein Modell mit fluchtenden Drahtdurchführungen geschaffen, was die Herstellung der Trays und auch schon der Form zur Herstellung des Tray, die das reale Modell beinhaltet, deutlich erleichtert. Insbesondere ist dies der Fall wenn sich die Länge des Bracketteils an der Drahtdurchführung orientiert und diesbezüglich in allen Bracketteilen gleich gewählt ist, sich also beispielsweise die Bracketteile alle bis zum oberen Beginn der Drahtdurchführung oder alle bis zur Mitte der Drahtdurchführung oder alle bis zum unteren Ende der Drahtdurchführung erstrecken, jeweils gesehen von der Kaufläche der Zahnkrone als oben.

Vorteilhaft kann es auch sein, das Modell inklusive weiteren Wänden, Böden und/oder Begrenzungen zu fertigen, insbesondere eine vollständige Gussform als Modell zu fertigen oder das Modell so in eine, insbesondere wieder verwendbare, Form zu bringen, dass eine fertige Gussform für ein zu gießendes Tray entsteht.

Insbesondere bei der Anordnung mehrerer Zahnkronen-Bracket-Einheiten in einem Modell wird das Vorsehen solcher Wände zwischen den einzelnen Zahnkronen-Bracket-Einheiten des Modells bei der Abformung durch Abgießen bevorzugt, da dann auf einfache Weise einzelne Trays anhand eines einzigen Modells geschaffen werden können.

Das Erzeugen des realen Modells kann beispielsweise durch Rapid-Prototyping und/oder dreidimensionales Drucken erfolgen. Dabei können auch zusätzliche Wände, Böden, Sockel und anderes in einem Arbeitsgang geschaffen werden.

Darauf folgt die Herstellung von insbesondere zumindest zwei, insbesondere flexiblen, Trays durch Herstellen von Teilabformungen des mindestens einem realen Modells, die jeweils geeignet sind, eine der mindestens zwei Zahnkronen zumindest teilweise und ein zudem der jeweiligen Zahnkrone zugeordneten Bracketabbild beziehungsweise korrespondierendes reales Bracket zumindest teilweise so aufzunehmen, dass die Anordnung des Bracketabbildes und der Abbildung der Zahnkrone durch das aufgenommene Bracket und die aufgenommene Zahnkrone real wiedergegeben wird. Geschaffen werden also zumindest zwei Trays zur Aufnahme je eines Brackets, die jeweils so beschaffen sind, dass sie einen Teil des Brackets und einen Teil der Zahnkrone so aufnehmen, dass die geplante Anordnung zwischen Zahnkronenabbild und Bracketabbild später real durch Zahnkrone und Bracket wiedergegeben wird.

Die Herstellung von solchen Trays erfolgt durch Tiefziehen von Tiefziehfolie.

Pro Bracket wird ein Tray geschaffen, dass nur eine Zahnkrone umschließt. Dies ermöglicht ein besonders einfaches Einbringen der Brackets zusammen mit den Trays in den Mundraum des Patienten. Dies kann aber auch durch Zertrennung einer Abformung erfolgen.

Vorteilhafterweise wird bei der Herstellung des realen Modells ein reales Modell pro mit Bracketabbild versehenem Abbild von Zahnkronen erstellt. Das separate Erstellen von einem Modell pro Zahnkronenabbild mit zugeordnetem Bracketteil erlaubt ein besonders einfaches Herstellen eines korrespondierenden Trays.

In einer anderen Ausführung wird vorteilhafterweise zunächst ein einziges reales Modell aller mit einem Bracketabbild versehenen Abbildern von Zahnkronen und den Bracketabbildern und Verbindungen eines oder zweier Kiefers eines Menschs erstellt und dieses anschließend so zerteilt, dass jedes Teilstück Abbild von zumindest Teilen nur einer Zahnkrone mit Bracket und ggf. Verbindung ist. Ein gemeinsames Herstellen kann beim Erstellen des Modells zu Einsparungen führen, insbesondere muss dann zunächst nur ein Modell gehalten werden. Insbesondere kann beim Rapid Prototyping eine einzelne Produktionsmasse verwendet werden. Ein anschließendes Auseinandersägen ermöglicht wiederum ein einfaches Herstellen von entsprechenden Trays. Jedoch lassen sich in einem einzigen Modell auch die einzelnen Zahnkronenteil-Bracketteil-Einheiten so voneinander separieren, dass an dem einen Modell einzelne Trays gefertigt werden können. So können jedoch beim Abformen durch Abgießen auch Trennwände beim Herstellen des realen Modells mit erstellt werden, so dass einzelne Trays ohne Auseinandersägen unproblematisch erstellt werden können.

So können beispielsweise alle Modelle von Zahnkronen in einer Reihe oder parallel zueinander verlaufenden Reihen, insbesondere Geraden, angeordnet sein. Hier bieten sich insbesondere eine oder zwei Reihen pro Kiefer an. Dabei sind die Reihen vorteilhafterweise miteinander verbunden und zusammen aus einem Stück gefertigt. Alternativ oder zusätzlich kann zwischen den einzelnen Modellen der Zahnkronen ein bestimmter Zwischenraum gelassen werden, so dass sich beispielsweise auf einer geraden Schiene in einem gewissen Abstand die einzelnen Modelle der Zahnkronenabbilder mit den Brackets und ggf. Verbindungen auffinden lassen. Auch zwischen parallelen Reihen wird vorteilhafterweise ein Abstand vorgesehen, so dass sich die Zahnkronenteil-Bracketteil-Einheiten nicht berühren. Die Verbindungen zwischen den Einheiten kann dann beispielsweise durch einen gemeinsamen Sockel geschaffen werden. Ein solches Modell ist besonders einfach und standarisiert herzustellen und insbesondere im weiteren Verlauf gut handhabbar. Insbesondere kann bei einem entsprechenden Abstand der einzelnen Zahnkronenteil-Bracketteil-Einheiten ein Zersägen vor der Herstellung einzelner Trays entfallen.

Mit Vorteil wird bei der Erstellung des virtuellen Setups so verfahren, dass zunächst ein realer Abdruck von mindestens zwei Zahnkronen von in einem Kiefer befindlichen Zähnen erstellt wird und sodann ein virtuelles Abbild des Abdruckes geschaffen und auf Basis des virtuellen Abdruckes anschließend ein virtuelles Setup erzeugt wird. Dabei wird der reale Abdruck zunächst ein Negativabdruck sein. Es kann anschließend zunächst ein Positiv des Abdruckes hergestellt und dieser dann in ein virtuelles Abbild überführt werden. Alternativ kann auch vom realen Negativabdruck unmittelbar und direkt ein virtuelles Abbild erzeugt werden, das dann in ein virtuelles Positiv umgesetzt wird, auf dem dann die Erstellung des virtuellen Setups basiert. Auch ist es vorstellbar, mit einem virtuellen Negativabdruck weiter zu arbeiten und ein negatives virtuelles Setup zu erstellen und an dessen Grenzflächen die Bracketabbilder bzw. Bracketabbildfußflächen anzuordnen.

In einer anderen Alternative wird vorteilhaft bei der Erstellung des virtuellen Setups so verfahren, dass zunächst ein realer Abdruck von mindestens zwei Zahnkronen von einem im Kiefer befindlichen Zähnen erstellt wird und anschließend ein reales Setup auf Basis des realen Abdrucks erzeugt wird. Dies kann beispielsweise durch Zersägen und Einsetzen in Wachs erfolgen. Anschließend wird ein virtuelles Abbild des realen Setups erstellt und so ein virtuelles Setup erzeugt. Bei der Erstellung des realen Abdrucks wird in der Regel zunächst ein Negativabdruck gewonnen und davon dann ein realer Positivabdruck erstellt, bevor ein reales Setup erzeugt wird.

Die Überführung ins virtuelle kann dabei jeweils durch verschiedene Verfahren, wie beispielsweise Abscannen durch einen Laser oder Rekonstruktion aus Computertomographiedaten erfolgen.

In einer anderen Verfahrensweise wird vorteilhaft gemäß das Erstellen des virtuellen Setups so durchgeführt, dass zunächst ein virtueller Abdruck von mindestens zwei Zahnkronen von in einem Kiefer befindlichen Zähnen, insbesondere durch optisches Vermessen der mindestens zwei Zahnkronen erzeugt wird. Darauf aufbauend wird dann ein virtuelles Setup erzeugt. Das Erstellen des virtuellen Abdrucks kann beispielsweise mit einem Laserscanner direkt im Mundraum des Patienten erfolgen. Alternativ kann es auch auf Basis eines Röntgen-CTs erzeugt werden. Andere Verfahren sind prinzipiell denkbar.

Mit Vorteil wird bei der Anordnung der Bracketabbilder zunächst die Auswahl eines Bracketabbildes aus einer Bracketbibliothek vorangeschaltet, wobei die Bracketbibliothek aus einer Menge virtueller Abbilder von real verfügbaren Brackets besteht. Durch eine solche Auswahl lässt sich der Produktionsschritt bei Brackets vereinfachen, indem auf Standardkomponenten zurückgegriffen wird. Die Auswahl aus verschiedenen Brackets ermöglicht jedoch eine besonders angepasst Behandlung.

Mit Vorteil wird bei der Erstellung des Trays so verfahren, dass das reale Modell zunächst in Abschnitte aufweisend nur ein Zahnkronenabbild mit Bracketabbild und ggf. Verbindung zerteilt wird und anschließend Teilabdrücke hergestellt werden. Alternativ kann gemäß je nach Anwendungsfall vorteilhaft so verfahren werden, dass zunächst ein Teilabformung über zumindest Modelle der mindestens zwei Zahnkronen erfolgt und der Teilabformung anschließend zerteilt wird, insbesondere so, dass jedes entstehende Teil nur ein Teilabdruck einer Zahnkrone mit zugeordneten Bracket und ggf. Verbindung darstellt.

Mit Vorteil sind die Bracketabbilder virtuelle Abbilder realer einteiliger Brackets. Einteilige Brackets sind solche, die abgesehen von beweglichen Teilen, insbesondere für Verriegelungen, einteilig ausgeführt sind. Einteilige Brackets lassen sich besonders einfach produzieren und weisen eine besonders gute Stabilität auf. Die Verwendung besonders anpassbarer, individuell gefertigter und/oder individuell angepasster Brackets, insbesondere solche bei denen die Länge anpassbar oder angepasst ist, ist bei dem hier vorliegenden Verfahren nicht notwendig, da eine Ausrichtung und Einstellung des Abstandes aufgrund der Trays problemlos möglich ist.

Vorteilhafterweise werden Bracketabbildfußflächen verwendet, die eine solche Dicke aufweisen, die gegenüber den realen Bracketfußflächen des jeweils abgebildeten realen Brackets um eine Mindestklebematerialdicke des zum Verkleben des Brackets mit den Zahnkronen verwendbaren Klebematerials erhöht ist. Würden die Brackets in der virtuellen Abbildung bzw. die virtuellen Bracketabbilder in der virtuellen Anordnung unmittelbar an die virtuellen Zahnkronenabbilder angeordnet, so wäre am Ende bei der Platzierung der Brackets mit Hilfe des Trays eigentlich kein Platz für Klebemasse, so dass sich durch die zwischengelagerte Klebematerialmasse Ungenauigkeiten insbesondere aufgrund der Verformung des elastischen Trays ergeben würden und/oder der Kleber zu stark aus der Klebefläche verdrängt würde, so dass keine zuverlässige Verklebung möglich wäre. Aus diesem Grund wird schon in den Bracketabbildfußflächen vorteilhafterweise eine Mindestdicke des Klebematerials eingerechnet, so dass ein problemloses Verkleben später möglich ist. Größere Abstände können durch mehr Klebemasse unproblematisch überbrückt werden. Dabei wird für die Ausrichtung durch das Tray gesorgt.

Mit Vorteil werden den Bracketabbildern korrespondierende reale Brackets beziehungsweise die Brackets so in die Teilabformungen eingesetzt, dass sie dort so angeordnet sind, wie die Bracketabbilder beziehungsweise Brackets bei der Herstellung des mindestens einen realen Modells angeordnet waren. Dadurch werden die Brackets in den Teilabformungen, also in den Trays, so angeordnet, dass sie passgenau in den Patienten bzw. auf die Zahnkronen des Patienten übertragen werden können, nämlich genau so, wie dies zuvor geplant wurde.

Dazu werden die Brackets vorteilhafterweise in die Teilabformungen eingedreht und dadurch in einen Hinterschnitt oder Hinterschnitte der Teilabformungen eingedreht. Ein Einsetzen in Hinterschnitte ohne Eindrehen ist entweder nicht möglich oder verändert die Teilabformungen häufig so, dass die Brackets nur noch schlechter oder gar nicht mehr gehalten werden. Durch ein drehendes Einsetzten kann das Bracket in Hinterschnitte, beispielsweise am oberen Flügel und/oder der Drahtdurchführung eingesetzte beziehungsweise eingeschraubt werden, ohne dass die Haltewirkung im Tray merklich reduziert wird.

Mit Vorteil werden die Teilabformungen durch Tiefziehen von Tiefziehfolie, insbesondere elastischer Harttiefziehfolie hergestellt. Auf diese Weise lassen sich besonders zuverlässig, schnell und preisgünstig entsprechende Teilabformungen, also Trays, herstellen.

Auf jedem Tray kann eine Griffhilfe angebracht werden, um das Ergreifen und Positionieren des Trays im Mundraum des Patienten zu erleichtern. Dazu kann insbesondere eine säulenförmige Struktur auf dem Tray, insbesondere auf dessen Oberseite, welche die Seite ist, die der Kaufläche zugewandt ist, angebracht werden. Diese kann insbesondere eine Verjüngung aufweisen, die von einem entsprechenden Instrument, beispielsweise einer Pinzette, zumindest teilweise umschlossen werden kann. Die Griffhilfe ist dabei rotationssymmetrisch um mindestens eine Achse und bietet in Zusammenwirken mit dem Instrument eine Beweglichkeit zumindest um diese Achse. Die Griffhilfe kann beispielsweise aus Metall gebildet sein und insbesondere eine Basis aufweisen, mit der sie mit dem Tray verbunden wird. Dies kann durch Ankleben, Einschmelzen oder bei der Trayerstellung durch Gießen durch Eingießen erfolgen. Die Verjüngung ist insbesondere zwischen Tray und einem Bereich mit größerem Durchmesser angeordnet. Die Verjüngung kann auch zwischen einer endständigen Halbkugel bis Kugel mit größerem Durchmesser und dem Tray angeordnet sein. Dann kann das Instrument die Kugel zumindest teilweise umschließen und auch so in die Verjüngung eingreifen, dass ein Abrutschen vom Griffelement ausgeschlossen ist. Dadurch kann auch eine Beweglichkeit zwischen Griffhilfe und Instrument gewährleistet werden, die über die Beweglichkeit um die Symmetrieachse hinausgeht. Insbesondere ist dann auch ein Verkippen zwischen Symmetrieachse und Längsachse des Instruments um einen definierten Winkelbereich möglich. Insbesondere weist das Instrument zwei Schalen mit viertel bis halbkugelförmigen Aussparungen auf, die auf die endständige Halbkugel bis Kugel im Durchmesser abgestimmt sind und durch die die endständige Halbkugel bis Kugel ergriffen werden kann. Insbesondere ist das Instrument, das in einem System aus Instrument und mindestens einer Griffhilfe oder mindestens einem Tray mit Griffhilfe beinhaltet sein kann, so ausgebildet, dass es ohne äußere Krafteinwirkung eine einmal ergriffene Griffhilfe nicht freigibt und ein Freigeben durch entsprechende Krafteinwirkung auf das Instrument erreicht werden kann.

Gelöst wird die Aufgabe auch durch ein Tray nach Anspruch 15, wobei bezüglich der Erstreckung des Tray die Ausführungen bezüglich des Verfahrens gelten und auf das Tray anwendbar sind.

### Kurze Beschreibung der Zeichnungen

Die rein beispielhaften und schematischen Figuren zeigen:
Fig. 1 eine Ansicht eines ganzen Abbildes
Fig. 2 eine Ansicht eines Modells
Fig. 3 eine Ansicht einer Form
Fig. 4 eine Ansicht eines Modells mit Tray
Fig. 5 eine Ansicht einer einreihigen Form
Fig. 6 eine Ansicht einer zweireihigen Form

### Weg(e) zur Ausführung der Erfindung

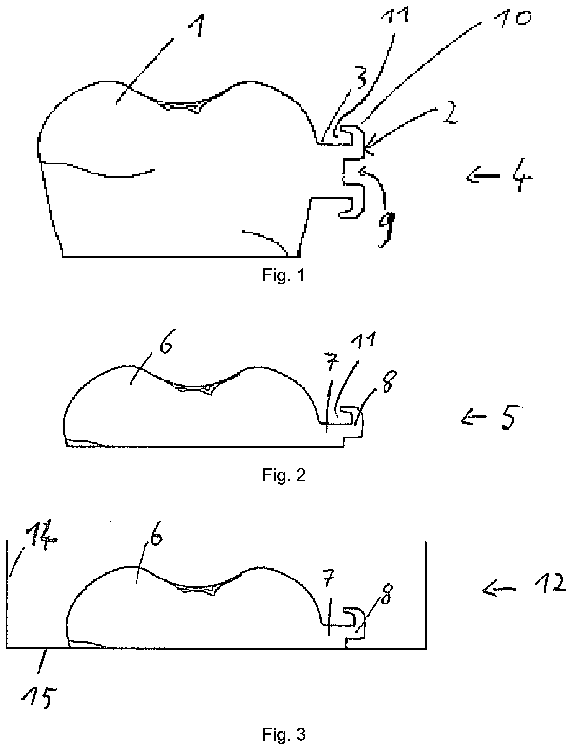

In Figur 1 ist gezeigt ein ganzes Abbild, beinhaltend ein Zahnkronenabbild 1, ein Verbindungsabbild 3 und ein Bracketabbild 2. Das Bracketabbild 2 weist eine Drahtdurchführung 9 sowie zwei Flügel 10 und Flügelhinterschnitte 11 auf.

Erfindungsgemäß wird ein solches ganzes Abbild 4 jedoch nicht verwendet. Anstelle eines solchen Abbildes wird vielmehr ein Modell 5 verwendet, wie es in Figur 2 gezeigt ist.

Figur 2 zeigt ein Modell 5 beinhaltend einen Zahnkronenteil 6, eine Verbindungsteil 7 sowie ein Bracketteil 8. Zu erkennen ist, dass der Bracketteil 8 einen Flügelhinterschnitt 11 aufweist. Auch von der Drahtdurchführung 9 bzw. ihrem Hinterschnitt ist ein Teil im Bracketteil 8 beinhaltet. Dadurch weist das Bracketteil 8 zwei Hinterschnitte auf. Auch der Zahnkronenteil 6 weist in dieser Ausführung an der linken Seite zu erkennen einen kleinen Hinterschnitt auf.

Anhand eines solchen realen Modells kann auf unterschiedliche Weise ein Tray erzeugt werden.

Figur 3 zeigt eine Form 12 zur Herstellung eines Trays durch Abgießen. Die Form 12 beinhaltet neben dem Modell 5, das bereits in Figur 2 gezeigt wurde und welches einen Zahnkronenteil 6 sowie einen Verbindungsteil 7 und einen Bracketteil 8 beinhaltet, einen Boden 15 und Wände 14. Durch die Wände 14 wird eine abgeschlossene Form 12 geschaffen, die mit entsprechendem Material ausgegossen werden kann. Dadurch kann das Tray erzeugt werden.

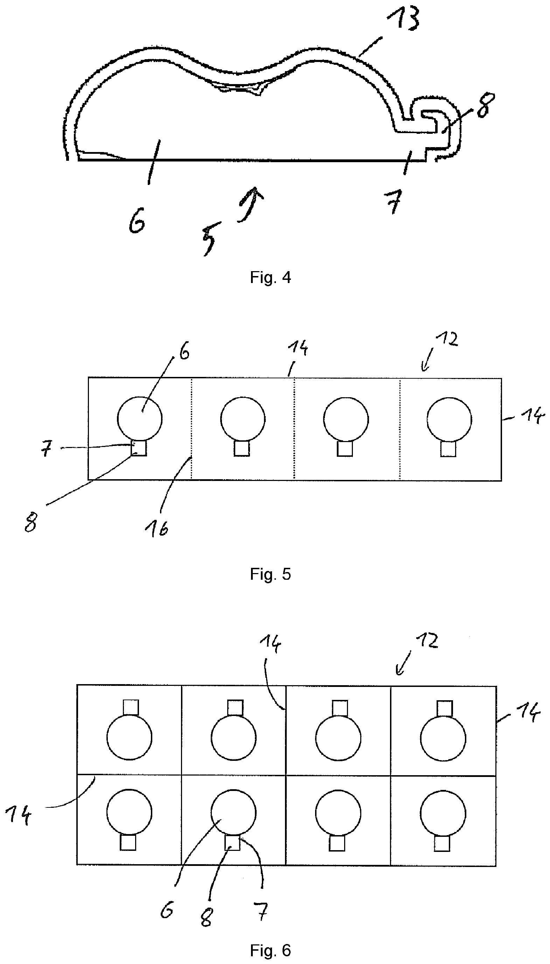

Figur 4 zeigt eine Herstellung eines Trays 13 unter Verwendung einer Tiefziehfolie. Zu erkennen ist Modell 5 beinhaltend ein Zahnkronenteil 6, ein Verbindungsteil 7 sowie ein Bracketteil 8. An diesem wird durch Tiefziehen einer Tiefziehfolie ein Tray 13 hergestellt.

Figur 5 zeigt eine Form 12, beinhaltend mehrere Zahnkronenteile 6, Verbindungsteile 7 und Bracketteile 8. Die Form 12 ist umschlossen von Wänden 14. Ebenfalls gezeigt sind gestrichelte Schnittlinien, an deren Stelle das durch Abgießen entstehende Tray zerteilt werden kann, so dass dann Einzeltrays entstehen.

Figur 6 zeigt eine zweireihige Form 12, beinhaltend acht Zahnkronenteile 6, Verbindungsteile 7 und Bracketteile 8. Die Form 12 weist nicht nur außen liegende Wände 14 auf. Sie weist vielmehr auch innen liegende Wände 14 auf, die horizontal und vertikal verlaufen und die Form 12 in acht Einzelformen unterteilen, mit deren Hilfe in einem einfachen Arbeitsablauf direkt acht einzelne Trays erzeugt werden können.

### Bezugszeichenliste

1. Zahnkronenabbild
2. Bracketabbild
3. Verbindungsabbild
4. Ganzes Abbild
5. Modell
6. Zahnkronenteil
7. Verbindungsteil
8. Backetteil
9. Drahtdurchführung
10. Oberer Flügel
11. Flügelhinterschnitt
12. Form
13. Tray
14. Wand
15. Boden
16. Schnittlinie

## Patentansprüche

1. Verfahren zur Herstellung von individuellen Trays (13) zum Positionieren von Brackets, umfassend die Schritte:
a) Herstellen eines realen Modells (5), wobei das mindestens eine Modell Abbild von zumindest Abschnitten von mindestens zwei Zahnkronen von in einem Kiefer befindlichen Zähnen ist und den Abbildern der Zahnkronen zugeordnete Bracketabbilder oder Brackets beinhaltet;
b) Herstellen von zumindest zwei Trays (13) durch Herstellen mindestens einer Abformung des realen Modells (5), wobei die Trays (13) jeweils geeignet sind, mindestens eine der mindestens zwei Zahnkronen und ein zu dem der jeweiligen Zahnkrone zugeordnetes Bracket oder zu dem zugeordnetem Bracketabbild korrespondierendes reales Bracket zumindest teilweise so aufzunehmen, dass die Anordnung des Bracketabbildes oder Brackets (2) und die Abbildung der Zahnkrone (1) im Modell durch das aufgenommene Bracket und die aufgenommene Zahnkrone real wiedergegeben wird, wobei die Abformung des realen Modells (5) mittels Tiefziehen erfolgt,
**dadurch gekennzeichnet,**
**dass** die Trays (13) jeweils eine Abformung nur jeweils eines Zahnkronenteils (6) der mindestens zwei Zahnkronen und nur jeweils eines Bracketteils (8) der mindestens zwei Bracketabbilder beziehungsweise Brackets umfassen, wobei sich jeweils der eine Bracketteil (8) von der Kaufläche der zugeordneten Zahnkrone aus gesehen vertikal bis maximal zum Ende einer Drahtführung (9) oder bis zum Ende eines ersten Hinterschnitts des Brackets oder Bracketabbildes, der bei der Betrachtung von der Kaufläche aus nach dem oberen Flügel (10) angeordnet ist, erstreckt.

2. Verfahren nach Anspruch 1, wobei sich jeweils der mindestens eine Bracketteil (8) von der Kauffläche der zugeordneten Zahnkrone aus gesehen vertikal bis maximal, insbesondere bis, zu dem Beginn der Drahtführung (9) oder bis maximal zu dem Beginn des ersten Hinterschnitts des Brackets oder Bracketabbildes, der unterhalb des oberen Flügels (10) angeordnet ist, erstreckt.

3. Verfahren nach einem der vorstehenden Ansprüche, wobei sich der Zahnkronenteil (6) von der Kauffläche aus vertikal bis maximal zum ersten Hinterschnitt der entsprechenden Zahnkrone erstreckt.

4. Verfahren nach einem der vorstehenden Ansprüche, wobei das reale Modell (5) von den Brackets nur die Bracketteile (8) und von den Zahnkronen nur die Zahnkronenteile (6) beinhaltet.

5. Verfahren nach einem der vorstehenden Ansprüche 1 bis 4, wobei das reale Modell (5) mehr Abbild der mindestens einen Zahnkrone als der Zahnkronenteil (6) und mehr Abbild des Bracketabbildes beziehungsweise Brackets als der Bracketteil (8) umfasst und die mindestens zwei Trays (13) nach der Abformung entsprechend gekürzt werden, insbesondere durch Schleifen.

6. Verfahren nach einem der vorstehenden Ansprüche, wobei in Schritt b) zunächst eine Abformung erstellt und diese anschließend so zerteilt wird, dass jedes Teilstück Abbild von nur einer Zahnkrone mit Bracket ist.

7. Verfahren nach einem der Ansprüche 1 bis 4, wobei in Schritt b) zunächst mindestens zwei Teilabformungen erstellt werden, so dass jede Teilabformung Abbild von nur einer Zahnkrone mit Bracket ist.

8. Verfahren nach einem der vorstehenden Ansprüche, wobei im realen Modell (5) die Abbilder der Zahnkronen entlang von parallel verlaufenden Geraden, insbesondere entlang einer oder zwei parallel verlaufenden Geraden, angeordnet sind.

9. Verfahren nach einem der vorstehenden Ansprüche, wobei das Modell (5) neben den Abbildern weitere Vorrichtungen (14, 15) zum Abformen, insbesondere Tiefziehen beinhaltet.

10. Verfahren nach einem der Ansprüche 1 bis 9, wobei die mindestens eine Abformung durch Tiefziehen einer Tiefziehfolie am Modell erstellt wird.

11. Verfahren nach einem der vorstehenden Ansprüche, wobei nach Schritt b) mindestens ein Bracket so in das Tray eingesetzt wird, dass es dort so angeordnet ist, wie die Bracketabbilder beziehungsweise Brackets bei der Herstellung des mindestens einen Trays angeordnet waren und insbesondere durch eine Klemmwirkung gehalten werden.

12. Verfahren nach Anspruch 11, wobei die Brackets in Hinterschnitte des Trays eingedreht werden.

13. Verfahren nach einem der vorstehenden Ansprüche, bei dem auf jedem Tray (13) eine Griffhilfe angebracht wird.

14. Tray zur Platzierung mindestens eines Brackets auf einer Zahnkrone, **dadurch gekennzeichnet, dass** das Tray (13) eine mittels Tiefziehen gebildete Abformung eines realen Modells von zumindest Abschnitten von zumindest zwei Zahnkronen von in einem Kiefer befindlichen Zähnen und den Abbildern der Zahnkronen zugeordnete Bracketabbilder oder Brackets ist, wobei das Tray lediglich einen Bracketteil (8) jedes Bracketabbildes beziehungsweise Brackets umfasst, der sich von der Kaufläche aus gesehen vertikal bis maximal zum Ende der Drahtführung (9) oder zum Ende des ersten Hinterschnitt des Brackets oder Bracketabbildes, der unterhalb des oberen Flügels (10) angeordnet ist, erstreckt.

## Claims

1. A method for producing individual trays (13) for the positioning of brackets, comprising the steps:
a) producing an actual model (5), wherein the at least one model is a replica of at least portions of at least two tooth crowns of teeth located in a jaw and includes bracket replicas or brackets assigned to the replicas of the tooth crowns;
b) producing at least two trays (13) by producing at least one impression of the actual model (5), wherein the trays (13) are suitable for at least partially receiving at least one of the at least two tooth crowns each as well as an actual bracket corresponding to the bracket assigned to the relevant tooth crown or corresponding to the assigned bracket replica, such that the arrangement of the bracket replica or bracket (2) and the replication of the tooth crown (1) in the model are reproduced in reality by the received bracket and the received tooth crown, wherein the impression of the actual model (5) is realised by means of thermoforming,
**characterised in that**
the trays (13) each comprise an impression of only one tooth crown part (6) of the at least two tooth crowns and only one bracket part (8) of the at least two bracket replicas or brackets, wherein the one bracket part (8) extends vertically, as seen from the occlusal surface of the assigned tooth crown, at most as far as the end of a wire guide (9) and/or as far as the end of a first undercut of the bracket or bracket replica that is arranged after the upper wing (10) when viewed from the occlusal surface.

2. The method according to claim 1, wherein the at least one bracket part (8) extends vertically, as seen from the occlusal surface of the assigned tooth crown, at most as far as, in particular as far as, the beginning of the wire guide (9) and/or at most as far as the beginning of the first undercut of the bracket or bracket replica that is arranged beneath the upper wing (10).

3. The method according to either one of the preceding claims, wherein the tooth crown part (6) extends vertically from the occlusal surface at most as far as the first undercut of the corresponding tooth crown.

4. The method according to any one of the preceding claims, wherein the actual model (5) comprises of the brackets only the bracket parts (8) and of the tooth crowns only the tooth crown parts (6).

5. The method according to any one of the preceding claims 1 to 4, wherein the actual model (5) comprises more a replica of the at least one tooth crown than the tooth crown part (6) and more a replica of the bracket replica or bracket than the bracket part (8), and, after the taking of the impression, the at least two trays (13) are correspondingly shortened in particular by grinding.

6. The method according to any one of the preceding claims, wherein in step b) initially one impression is created and this impression subsequently is divided up such that each piece is a replica of only one tooth crown with a bracket.

7. The method according to any one of claims 1 to 4, wherein in step b) initially at least two partial impressions are created, so that each partial impression is a replica of only one tooth crown with bracket.

8. The method according to any one of the preceding claims, wherein the replicas of the tooth crowns are arranged in the actual model (5) along straight lines running in parallel, in particular along one or two straight lines running in parallel.

9. The method according to any one of the preceding claims, wherein the model (5) comprises not only the replicas, but also further devices (14, 15) for taking impressions, in particular for thermoforming.

10. The method according to any one of claims 1 to 9, wherein the at least one impression is created by thermoforming a thermoforming film on the model.

11. The method according to any one of the preceding claims, wherein after step b) at least one bracket is inserted into the tray such that it is arranged there in the same way as the bracket replicas or brackets were arranged during the production of the at least one tray, and in particular is/are retained by a clamping effect.

12. The method according to claim 11, wherein the brackets are screwed into undercuts of the tray.

13. The method according to any one of the preceding claims, in which a gripping aid is provided on each tray (13).

14. A tray for placing at least one bracket on a tooth crown, **characterised in that** the tray (13) is an impression, formed by thermoforming, of an actual model of at least portions of at least two tooth crowns of teeth located in a jaw and bracket replicas or brackets assigned to the replicas of the tooth crowns, wherein the tray merely comprises a bracket part (8) of each bracket replica or bracket, which extends vertically, as seen from the occlusal surface, at most as far as the end of the wire guide (9) and/or as far as the end of the first undercut of the bracket or bracket replica that is arranged beneath the upper wing (10).

## Revendications

1. Procédé de fabrication de plateaux individuels (13) pour le positionnement de brackets, comprenant les étapes suivantes :
a) fabrication d'un modèle réel (5), l'au moins un modèle réel étant l'empreinte d'au moins deux sections d'au moins deux couronnes dentaires de dents se trouvant dans un maxillaire et contenant le système de prise d'empreinte des systèmes de prise d'empreinte de brackets associés aux couronnes dentaires,
b) fabrication d'au moins deux plateaux (13) par la réalisation d'au moins un moulage du modèle réel (5), les plateaux (13) étant respectivement apte à recevoir du moins partiellement au moins une des au moins deux couronnes dentaires et un bracket réel associé à la couronne dentaire respective ou correspondant à l'empreinte de bracket associée de manière à ce que la disposition de l'empreinte du bracket ou du bracket (2) et l'empreinte de la couronne dentaire (1) dans le modèle soit réellement restituée par le bracket reçu et la couronne dentaire reçue, le moulage du modèle réel (5) se faisant par emboutissage,
**caractérisé en ce que**
les plateaux (13) comprennent seulement respectivement un moulage d'une partie de couronne dentaire (6) des au moins deux couronnes dentaires et seulement respectivement d'une partie de bracket (8) des au moins deux empreintes de brackets ou brackets, la partie de bracket (8), vue depuis la surface de mastication de la couronne dentaire associée, s'étendant verticalement au maximum jusqu'au bout d'un guide de fil (9) ou jusqu'au bout d'une première contre-dépouille du bracket ou de l'empreinte du bracket qui, en cas d'observation depuis la surface de mastication, est disposé en aval de l'aile supérieure (10).

2. Procédé selon la revendication 1, dans lequel l'au moins une partie de bracket (8), vue depuis la surface de mastication de la couronne dentaire associée, s'étend verticalement au maximum, en particulier jusqu'au début du guide de fil (9) ou au maximum jusqu'au début de la première contre-dépouille du bracket ou de l'empreinte du bracket qui est disposé en dessous de l'aile supérieure (10).

3. Procédé selon une des revendications précédentes, dans lequel la partie de couronne dentaire (6), s'étend, vue depuis la surface de mastication, verticalement au maximum jusqu'à la première contre-dépouille de la couronne dentaire correspondant.

4. Procédé selon une des revendications précédentes, dans lequel le modèle réel (5) des brackets ne contient que les parties de brackets (8) et seulement les parties de couronnes dentaires (6) des couronnes dentaires.

5. Procédé selon une des revendications précédentes en 1 à 4, dans lequel le modèle réel (5) contient plus d'empreinte de l'au moins un une couronne dentaire que la partie de couronne dentaire (6) et plus d'empreinte de l'empreinte de bracket ou du bracket que la partie de bracket (8) et que les au moins deux plateaux (13) sont raccourcis en conséquence après le moulage, en particulier par meulage.

6. Procédé selon une des revendications précédentes, dans lequel, dans l'étape b), un moulage est d'abord réalisé et celui-ci est ensuite découpé de manière à ce que chaque morceau soit l'empreinte d'une seule couronne dentaire avec bracket.

7. Procédé selon une des revendications précédentes en 1 à 4, dans lequel, dans l'étape b), au moins deux moulages partiels sont d'abord réalisés, de sorte que chaque moulage partiel soit l'empreinte d'une seule couronne dentaire avec bracket.

8. Procédé selon une des revendications précédentes, dans lequel, dans le modèle réel (5), les empreintes des couronnes dentaires sont disposées le long de droites s'étendant parallèlement, en particulier le long d'une ou deux droites s'étendant parallèlement.

9. Procédé selon une des revendications précédentes, dans lequel le modèle (5) contient, outre les systèmes de prise d'empreinte, d'autre dispositifs (14, 15) de moulage, en particulier d'emboutissage.

10. Procédé selon une des revendications précédentes en 1 à 9, dans lequel l'au moins un moulage est réalisé par emboutissage d'un film d'emboutissage sur le modèle.

11. Procédé selon une des revendications précédentes, dans lequel, après l'étape b), au moins un bracket est inséré dans le plateau de manière à ce qu'il soit disposé là où les systèmes de prise d'empreinte à brackets ou les brackets étaient disposés lors de la réalisation de l'au moins un plateau, et en particulier sont maintenus par un effet de serrage.

12. Procédé selon la revendication 11, dans lequel les bracket sont vissés dans des contre-dépouilles du plateau.

13. Procédé selon une des revendications précédentes, dans lequel une aide à la préhension est disposée sur chaque plateau (13).

14. Plateau pour le positionnement d'au moins un bracket sur une couronne dentaire, **caractérisé en ce que** le plateau (13) est un moulage constitué par emboutissage d'un modèle réel d'au moins deux sections d'au moins deux couronnes dentaire de dents se trouvant dans un maxillaire et d'un système de prise d'empreinte à brackets ou d'un brackets associé aux systèmes de prise d'empreinte des couronnes dentaires, le plateau comprenant simplement une partie de bracket (8) de chaque empreinte de bracket qui s'étend, vue depuis la surface de mastication, verticalement au maximum jusqu'au bout du guide de fil (9) ou jusqu'au bout de la première contre-dépouille du bracket ou de l'empreinte de bracket qui est disposé en-dessous de l'aile supérieure (10).
